# EUROPÄISCHE PATENTANMELDUNG

(11) **EP 3 163 430 A1**
(43) Veröffentlichungstag der Anmeldung: **03.05.2017**
(21) Anmeldenummer: 16190976.7
(22) Anmeldetag: 28.09.2016
(51) Int. Cl.: G06F 3/12

(54) **VERFAHREN ZUR ERSTELLUNG VON VORSTUFENDATEN FÜR DRUCKAUFTRÄGE DURCH EIN LAYOUT-PROGRAMM**

(30) Priorität: 30.10.2015 DE 102015221279
(71) Anmelder: Heidelberger Druckmaschinen AG, 69115 Heidelberg (DE)
(72) Erfinder: Thelen, Matthias, 57074 Siegen (DE); Brandhorst, Sascha, 57518 Betzdorf (DE)

(57) **Zusammenfassung**

Verfahren zur Erstellung von Vorstufendaten für Druckaufträge durch einen ersten, mit einem Netzwerk verbundenen, Rechner, wobei der erste Rechner aus einem Server mit einer Datenbank und darin gespeicherten Templates für Bildinhalte, sowie einem Layoutprogramm mit einer Benutzeroberfläche besteht, die folgenden Schritte umfassend:
• Erstellen der Templates mit Bildinhalten auf einem lokalen Rechner
• Hochladen und Abspeichern der Templates in der Datenbank des Servers durch das Anwendungsprogramm
• Zugriff auf die Benutzeroberfläche des Layoutprogramms von einem zweiten Rechner mit einem Internetbrowser
• Erstellen von Vorstufendaten eines Druckauftrages mit fertigem Layout durch Editieren der vorhandenen Templates mittels der Bild- und Textbearbeitungswerkzeuge der Benutzeroberfläche durch den zweiten Rechner
• Abspeichern der fertigen Vorstufendaten auf dem Server
• Durchführen eines Druckauftrages mit den gespeicherten Vorstufendaten

## Beschreibung

Die vorliegende Erfindung betrifft ein Verfahren zur Erstellung von Vorstufendaten durch einen Rechner mit einem Layout-Programm.

Die Erfindung liegt in dem technischen Gebiet der digitalen Printmedienerstellung.

In der modernen Druckindustrie nimmt die Digitalisierung der Vorstufe einen immer wichtigeren Raum ein. Neben der Einführung von Workflow-Systemen, also Anwendungsprogrammen, welche die gesamte Vorstufe vom Eingang des Kundenauftrages bis zum Senden der aufbereiteten Daten an die Druckmaschine managen, betrifft dies vor allem das Ermöglichen der Abarbeitung von Kundenaufträgen über das Internet. In diesem, auch Web-to-print genannten, Bereich hat sich in den letzten Jahren eine enorme Vielfalt von Onlinetools verbreitet. Diese arbeiten dabei stets nach einem ähnlichen Grundprinzip: Ein Kunde kann über einen Internetbrowser auf die Homepage des jeweiligen Anbieters zugreifen und dort auf dem Medienproduktionssystem des Anbieters seinen eigenen Druckauftrag erstellen. Dies wird ermöglicht, indem der Kunde selbst erstellte Grafiken und Texte über den Internetbrowser zum Medienproduktionssystem des Anbieters hoch lädt und in einem Editor des Medienproduktionssystems gemäß den Wünschen seines Druckauftrages konfiguriert. Zusätzlich sind in den meisten Medienproduktionssystemen von Druckanbietern eine große Anzahl von Bildobjektstemplates vorhanden, welche der Kunde ebenfalls in das Layout seines Druckauftrages einbauen kann. Die Formatierung der Textfelder umfasst zudem sämtliche aus der digitalen Textverarbeitung bekannten Möglichkeiten. Mit diesen Editoren in den Medienproduktionssystemen der Druckanbieter können somit viele verschiedene Arten von Druckaufträgen realisiert werden. Dies reicht von einfachen einfarbigen Flyern über komplexere Broschüren bis hin zu großflächigen Plakaten. Je nach Art des Druckauftrages geben die Onlinetools zudem über ihre Bedienoberfläche Hilfestellung über die Anordnung der gewünschten Textfelder und Bildobjekte des Druckauftrages. Hat der Kunde das Layouten seines Druckauftrages abgeschlossen, werden die Daten über das Medienproduktionssystem des Druckanbieters gemäß der Art des Druckauftrages aufbereitet, d. h. die Daten werden in ein entsprechendes digitales Format, welches für die Weiterverarbeitung im Workflowsystem des Druckanbieters geeignet ist, überführt und dann an das Workflowsystem des Druckanbieters gesendet. Dieses arbeitet dann den Druckauftrag wie jeden klassischen In-house-Druckauftrag, welcher vom Kunden bei der Druckerei selbst in Auftrag gegeben wurde, ab.

Ein in der grafischen Industrie weit verbreitetes Programm zur Erstellung von Printerzeugnissen ist Adobe InDesign. Es wird in vielen Werbeagenturen, Druckereien und Verlagen eingesetzt, das professionellen Setzen und Layouten von Druckprodukten durchzuführen. Diese reichen von der professionellen Zeitungs- und Zeitschriftenproduktion über die Herstellung von Prospekten und Broschüren bis hin zum Layout von Katalogen, Plakaten und Geschäftsdrucksachen. Es ermöglicht zudem, die Erstellung von PDF Bildschirmpräsentationen mit eingebundenen Filmen, Flashanimationen und ermöglicht damit auch die Erstellung interaktiver E-books. Es zeichnet sich auch durch eine Vielzahl von Schnittstellen zu anderen grafischen Anwendungsprogrammen aus, d. h. es ermöglicht den Import und Export verschiedenster grafischer Dateiformate. Was aus dem Stand der Technik jedoch nicht bekannt ist, ist die Verbindung von Adobe in Design mit Online-Medienproduktionssystemen zum Einsatz im Web-to-print-Bereich. Aufgrund der großen Verbreitung von Adobe in Design würde eine solche Verbindung jedoch einen enormen Effizienzgewinn bedeuten. Wäre es möglich, über ein Online-Medienproduktionssystem eines Druckanbieters Druckauftragsdaten in Adobe in Design Formaten zu erstellen, bzw. zu verwenden, würde dies einen enormen Synergieeffekt bedeuten.

Die Aufgabe der vorliegenden Erfindung ist daher die Offenbarung eines Verfahrens zur Onlineerstellung von Vorstufendaten unter der Einbeziehung von Adobe InDesign.

Die erfindungsgemäße Lösung dieser Aufgabe stellt dabei ein Verfahren zur Erstellung von Vorstufendaten für Druckauftrage durch einen Rechner mit einem Layoutprogramm dar, wobei der Rechner mit dem Layoutprogramm aus einem Server mit einer Datenbank und darin gespeicherten Templates für Bildinhalte sowie einem Anwendungsprogramm mit einer Benutzeroberfläche besteht, wobei das Verfahren die folgenden Schritte umfasst:
1. Erstellen der Templates mit Bildinhalten auf einem lokalen Rechner
2. Hochladen und Abspeichern der Templates in der Datenbank des Servers durch das Anwendungsprogramm
3. Zugriff über den Internetbrowser auf die Benutzeroberfläche des Anwendungsprogramms
4. Erstellen von Vorstufendaten eines Druckauftrages mit fertigem Layout durch Editieren der vorhandenen Templates mittels der Bild- und Textbearbeitungswerkzeuge der Benutzeroberfläche durch den zweiten Rechner
5. Abspeichern der dortigen Vorstufendaten auf dem Server
6. Durchführen eines Druckauftrages mit den gespeicherten Vorstufendaten

Das zentrale Element des erfindungsmäßen Verfahrens ist dabei die Bereitstellung eines sich in einem Netzwerk befindlichen Server mit einer Datenbank, wobei das Anwendungsprogramm auf dem Server läuft und Zugriff auf die Datenbank hat. Das Anwendungsprogramm verfügt weiterhin über eine grafische Benutzeroberfläche, welches es einem Anwender, der sich im gleichen Netzwerk wie der Server befindet, ermöglicht, auf die in der Datenbank gespeicherten Templates für Bildinhalte zuzugreifen, diese zu editieren und zusammen mit eigens erstellten Grafiken und Texten die Vorstufendaten für einen Druckauftrag zu erzeugen. Ein Anwender mit einem Rechner mit einem Internetbrowser kann somit auf den Server zugreifen, indem er sich mittels des Internetbrowsers mit dem Anwendungsprogramm und seiner grafischen Benutzeroberfläche verbindet und dann auf die gespeicherten Templates zugreift und diese Templates mittels der Editierelemente der Benutzeroberfläche so anordnet, wie dies seinem Wunsch für einen neuen Druckauftrag entspricht. Die Vorstufendaten des so erstellten neuen Druckauftrages werden dann auf dem Server abgespeichert und können zur Durchführung des Druckauftrages an eine Druckerei weitergeleitet werden.

Vorteilhafte und bevorzugte Weiterbildungen des Verfahrens ergeben sich aus den zugehörigen Unteransprüchen sowie aus der Beschreibung mit den zugehörigen Zeichnungen.

Eine bevorzugte Weiterbildung des erfindungsgemäßen Verfahrens ist dabei, dass der zweite Rechner sich im selben Netzwerk wie der erste Rechner befindet oder einen Zugriff auf dieses Netzwerk hat. Der zweite Rechner, von welchem aus der Anwender arbeitet und somit die Vorstufendaten erstellt, muss einen Zugriff auf den sich im Netzwerk befindlichen Server haben. Dies kann geschehen, indem der zweite Rechner sich im selben Netzwerk befindet oder, im Falle dass der zweite Rechner sich außerhalb der Reichweite des Netzwerkes befindet, muss er zumindest Zugriff auf dieses Netzwerk haben. Dieser Zugriff kann auf vielerlei Weise geschehen, z. B. indem das Netzwerk mit dem Internet verbunden ist genauso wie der zweite Rechner, oder auch durch Einrichten einer anders gesonderten Verbindung zwischen dem zweiten Rechner und dem Netzwerk.

Eine weitere bevorzugte Weiterbildung des erfindungsgemäßen Verfahrens ist dabei, dass bereits auf dem Server abgespeicherte Vorstufendaten ausgecheckt, nachbearbeitet und wieder eingecheckt werden. Bereits erstellte Druckauftragsdaten, d. h. Vorstufendaten, die auf dem Server abgespeichert sind, können vom Anwender über den zweiten Rechner und den Internetbrowser wieder aufgerufen werden, nachbearbeitet werden, d. h. neu editiert werden, und dann erneut abgespeichert werden. Damit ist es zum einen möglich, einen einmal erstellten Druckauftrag noch zu ändern, bevor dieser durchgeführt wird, und zum anderen kann damit ein neuer Druckauftrag auf Basis eines bereits durchgeführten Druckauftrages erstellt werden.

Eine weitere bevorzugte Weiterbildung des erfindungsgemäßen Verfahrens ist dabei, dass es sich sowohl bei den zu erstellenden Vorstufendaten als auch bei den Templates um Dokumente im Adobe in Design Format handelt. Da Adobe in Design ein in der grafischen Industrie sehr verbreitetes Layoutprogramm ist, ist die Verwendung von Dateien im Adobe in Design Format naheliegend. Die Templates werden dabei mit Adobe in Design erstellt, sind dementsprechend im Adobe in Design Format vorhanden und werden dann auf dem Server in der Datenbank abgespeichert. Das Editieren der Templates im Rahmen der Erstellung der Vorstufendaten über die Benutzeroberfläche des Anwendungsprogramms vom zweiten Rechner mit seinem Internetbrowser aus geschieht dabei mit diesen Templates im Adobe in Design Format und diese werden nach Abschluss des Editierens auch wieder im Adobe in Design Format abgespeichert.

Eine weitere bevorzugte Weiterbildung des erfindungsgemäßen Verfahrens ist dabei, dass es sich bei dem Server um einen Rechner mit der darauf eingerichteten Software Adobe in Design Server inklusive einer Datenbank handelt und bei dem Anwendungsprogramm um ein Programm, welches die Software Adobe in Design Server kontrolliert. Als Server fungiert ein Rechner auf dem die Software Adobe in Design Server läuft, wodurch sich aus dem Rechner mit dieser Software ein Server mit Datenbank ergibt, auf welchem die Templates gespeichert werden können. Dieser Server wird vom Anwendungsprogramm mit seiner Benutzeroberfläche kontrolliert. D. h. ein Anwender erlangt Zugriff auf den Server und die in seiner Datenbank gespeicherten Templates, indem er mit der Benutzeroberfläche des den Server kontrollierenden Anwendungsprogrammes kommuniziert.

Eine weitere bevorzugte Weiterbildung des erfindungsgemäßen Verfahrens ist dabei, dass die Templates aus der Musterseite mit dem Grunddesign aus dem Raster mit den geometrischen Platzierungsinformationen für Texte und Bilder und single assets, den zu platzierenden Texten und Bildern, bestehen. Die Templates, die auf dem Adobe in Design Server gespeichert werden, unterteilen sich in drei Arten: einmal eine Musterseite mit dem Grunddesign der zu erstellenden Vorstufendaten, ein zweiter Typ ergibt sich aus dem Raster mit den geometrischen Platzierungsinformationen für die zu platzierenden Bildobjekte und Texte und die dritte Art von Templates bilden die sogenannten single assets, wobei es sich um die zu platzierenden Bildobjekte und Texte handelt. Um vollständige Vorstufendaten zu erhalten, muss der Anwender also alle drei Arten der Templates verwenden. Er braucht dabei üblicherweise ein Template von der Art der Musterseite mit dem Grunddesign und ein Template mit dem Raster mit den Platzierungsinformationen und beliebig viele single assets, mindestens jedoch eines.

Eine weitere bevorzugte Weiterbildung des erfindungsgemäßen Verfahrens ist dabei, dass über die Benutzeroberfläche die Templates in verschiedenster Weise editierbar sind, insbesondere durch das Einfügen neuer Texte und Bilder, das Verändern von Texten, das Vergrößern, Verkleinern, Rotieren und Verschieben von Bildern und das Editieren und Austauschen bereits platzierter Texte und Bilder. Die Benutzeroberfläche des Anwendungsprogrammes muss es dem Anwender, welcher über den zweiten Rechner und darauf befindlichen Internetbrowser auf die Benutzeroberfläche zugreift, ermöglichen, die single assets, also die zu platzierenden Texte und Bilder, wie genannt zu editieren. Dafür sind verschiedenste Elemente sowie sie auch aus der Textverarbeitung und aus grafischen Programmen bekannt sind, notwendig. Zusätzlich zum Editieren bereits vorhandener single assets ist es auch möglich, neue Texte und Bilder zu erzeugen, bzw. einzufügen. Diese werden dann den bereits bestehenden single assets in der Datenbank hinzugefügt.

Eine weitere bevorzugte Weiterbildung des erfindungsgemäßen Verfahrens ist dabei, dass das Editieren der Templates nach dem What-you-see-is-what-you-get-Prinzip funktioniert. Das What-you-see-is-what-you-get-Prinzip ist aus verbreiteten Office Programmen, z. B. Word oder Open Office, weit verbreitet. Es bedeutet, dass jede Änderung im Layout, die der Anwender vornimmt und auf seinem Bildschirm sieht, auch im erstellten Dokument in genau der gleichen Art und Weise durchgeführt wird.

Das Verfahren sowie funktionell vorteilhafte Weiterbildungen des Verfahrens werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1: das Layout-Interface in einem Webbrowser
- Figur 2: bevorzugte Anwendungsfälle für das Verfahren
- Figur 3: den Aufbau des verwendeten Layoutsystems
- Figur 4: den Ablauf des offenbarten Verfahrens

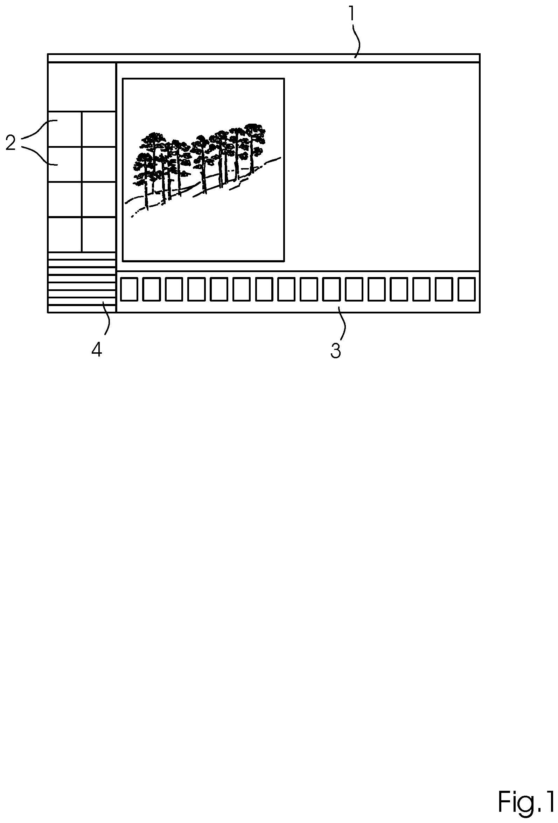

In der bevorzugten Ausführungsvariante wird Adobe InDesign verwendet. Es ist ein Programm zur Erstellung von Printerzeugnissen. Ist ein Dokument in Adobe InDesign erstellt, kann dieses auch nur mit Adobe InDesign bearbeitet werden. Adobe InDesign-Dokumente werden Online über einen Browser 1 im Layouter 5 editiert und mit Daten (Texte und Bilder) aus einer Datenbank 7 befüllt. Ein Beispiel eines Layouters 5, dargestellt in einem Browser 1, ist in Figur 1 abgebildet. Gut erkennbar sind die auszuwählenden und zu editierenden Templates 2, die zum Editieren notwendigen Bildbearbeitungswerkzeuge 4 und die Seitenübersicht 3 zum Navigieren in bereits erstellten Seiten von Vorstufendaten 9.

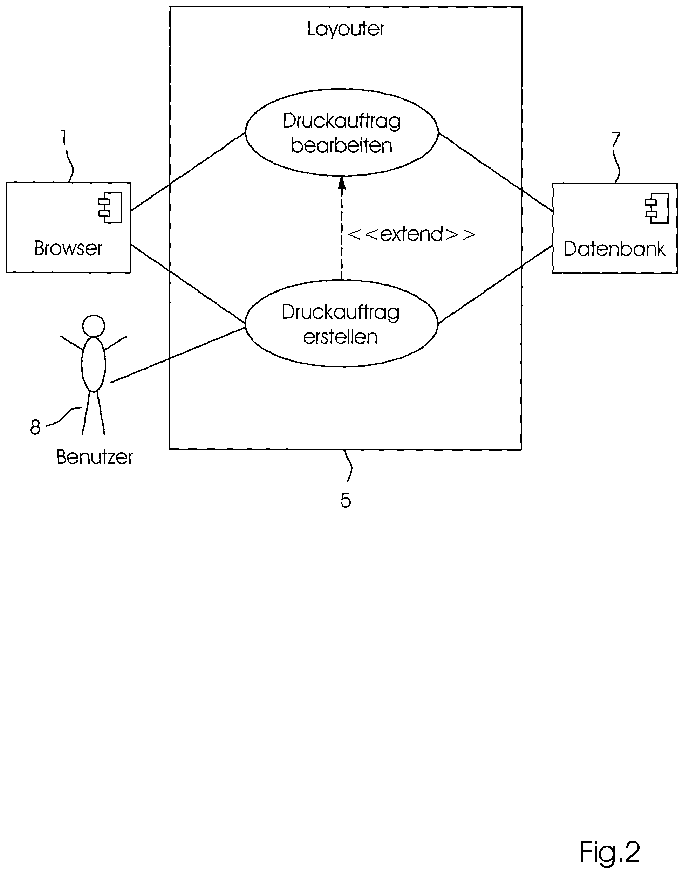

Bevorzugte Anwendungsfälle wiederum sind in Figur 2 dargestellt. Sie umfassen in der Hauptsache das Erstellen von Vorstufendaten 9, sowie das Editieren bereits vorhandener Vorstufendaten 9, bzw. der Templates 2 aus denen diese erstellt wurden.

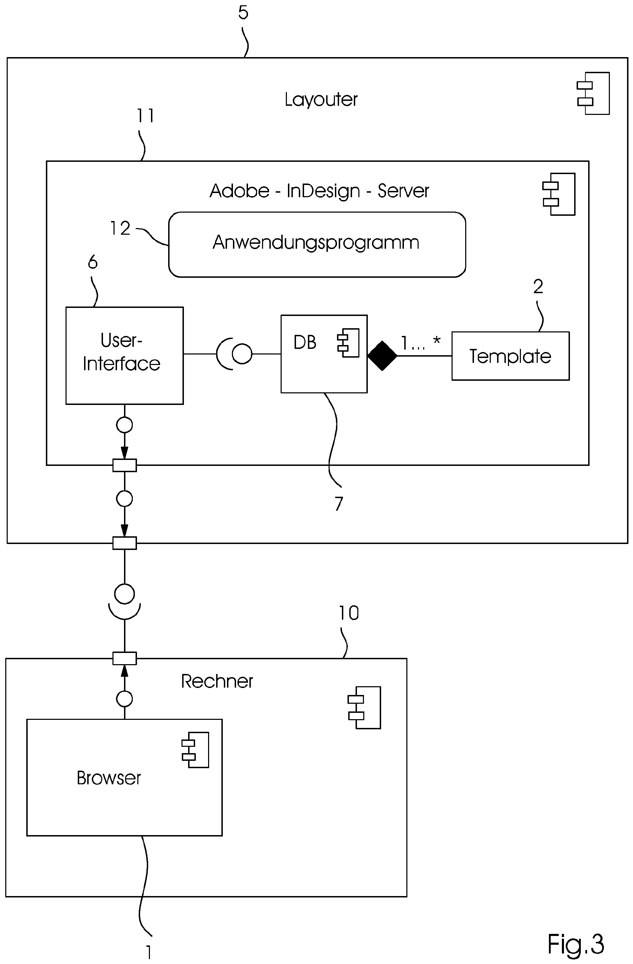

Der Layouter 5 selbst ist in Figur 3 noch einmal schematisch bzgl. seines Aufbaus dargestellt. Er besteht aus einem Adobe InDesign-Server 11 mit einer Datenbank 7, welche beide auf einem Rechner 10 eingerichtet sind. In dieser werden Templates 2 für die Erstellung von Vorstufendaten 9 für einen Druckauftrag abgelegt. Weiterhein verfügt der Layouter 5 über ein grafisches User-Interface (GUI) 6, über welches von einem Arbeitsrechner 13 Zugriff auf den Adobe InDesign-Server 11 genommen wird. Dies geschieht über einen Internetbrowser 1, welcher auf dem Arbeitsrechner 10 eingerichtet ist. Weiterhin läuft auf dem Server ein Layoutprogramm 12 welches sowohl den Adobe InDesign-Server 11 selbst, als auch die GUI 6 kontrolliert. Der Adobe InDesign-Server 11 als solches ist somit lediglich eine 'BlackBox'. Erst mit einer externen Steuerung, anhand des Layoutprogramms 12, kann man an die jeweiligen Inhalte gelangen. Diese können dann in Form der zuvor in Adobe InDesign erstellten Templates 2 auf die Seite platziert und alle stilistischen Inhalte der Templates 2 werden eins zu eins auf das neue Dokument übernommen. Das Layoutprogramm 12 arbeitet dabei im Hintergrund um die Dokumente zu indizieren und in die Datenbank 7 zu schreiben. Die Daten aus der Datenbank 7 werden von einem PHP-BackEnd ausgelesen und an den Layouter 5, bzw. dessen GUI FrontEnd 6 geliefert.

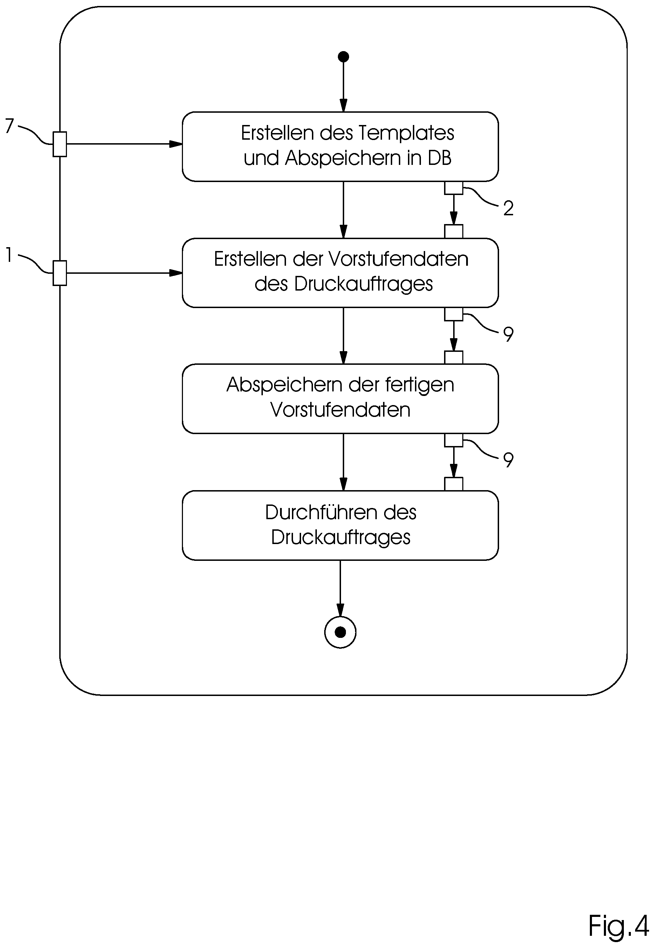

Die technische Umsetzung des Verfahrens, schematisch dargestellt in Figur 4, funktioniert dann folgendermaßen:
Zuerst werden von einem authorisierten Anwender die Templates 2, welche später zur Verfügung stehen sollen, in Adobe InDesign erstellt. Es gibt drei Arten von Templates 2:
   die Musterseite, das Raster und sogenannte SingleAssets. Die Musterseite enthält die Grundgestaltung der Seite. Sie wird als InDesign -Dokument abgespeichert. Das Raster enthält die Koordinaten, wo später Daten aus der Datenbank 7 (Texte und Bilder) platziert werden dürfen. Die SingleAssets wiederum enthalten stilistische Daten wie z.B. Text- und Bildzeichnungen. Es können anhand von Absatz- und Zeichenformaten alle Adobe InDesign-Funktionen benutzt werden. Die Templates 2 werden dann in der Datenbank 7 des Servers 11 abgespeichert. Beim Abspeichern werden alle relevanten Inhalte wie Positionen, Koordinaten, Texte und Textauszeichnungen in die Datenbank 7 geschrieben. Im Grunde wird das komplette Template 2 auseinander genommen, indiziert und die relevanten Daten in der Datenbank 7 abgespeichert.

Möchte nun ein normaler Anwender 8 die Vorstufendaten 9 eines Druckauftrages erstellen, so verbindet er sich mit seinem Browser 1 über ein Netzwerk, üblicherweise das Internet, mit der GUI 6 des Layouters 5. Er erhält so Zugriff auf die in der Datenbank 7 abgelegten Templates 2. Diese kann er mittels der Bildbearbeitungswerkzeuge 4 der GUI 6 Editieren. Folgende Kernfunktionen stehen dem Anwender 8 online im Browser 1 zur Verfügung:
- Adobe InDesign Seiten öffnen und darin enthaltene Texte editieren - und zwar nach dem WYSIWYG-Prinzip
- Adobe InDesign Seiten öffnen und darin enthaltene Bilder editieren, d.h. vergrößern, verkleinern, rotieren, verschieben
- Neue Bilder oder Texte in ein Dokument platzieren
- Mit Hilfe der Raster und SingleAssets, Inhalte aus der dahinter liegenden Datenbank 7 gemäß den zuvor erstellten Templates 2 auf die Seite platzieren
- Platzierte Inhalte können weiterhin editiert und ausgetauscht werden

Sobald der Anwender 8 online im Browser 1 seine Änderungen speichert, werden alle Inhalte und Änderungen durch den Adobe InDesign-Server 11 wieder auf das Adobe InDesign-Dokument übernommen. Es besteht nach der online Editierung weiterhin die Möglichkeit die erzeugten Adobe InDesign-Dokumente auszuchecken und diese nachzubearbeiten. Werden im Rahmen der Editierung durch das Hinzufügen neuer Texte und Bilder neue Templates 2 geschaffen, so werden diese den bereits vorhandenen Templates 2 hinzugefügt. Dabei können diese neu geschaffenen Templates 2 sowohl nur dem erstellenden Anwender 8 im Rahmen neuer Aufträge, bzw. zur Nachbearbeitung alter Aufträge, zur Verfügung gestellt werden, als auch für alle anderen Anwender 8 verfügbar sein.

Sind die erstellten Vorstufendaten 9 fertig editiert, wird auf Veranlassung des Anwenders 8 der Druckauftrag mit diesen Vorstufendaten 9 durchgeführt. Dazu werden die Vorstufendaten 9 vom Adobe InDesign-Server 11 in das Workflow-System der, den Layouter 5 betreibenden, Druckerei eingespeist und dort abgearbeitet. Eine weitere bevorzugte Ausführungsvariante beinhaltet die Weiterleitung der Vorstufendaten 9 an eine kooperierende Druckerei, falls es sich beim Betreiber des Layouters 5 um einen reinen Dienstleister handelt.

### Bezugszeichenliste

- 1: Browser
- 2: Template(s)
- 3: Seitenübersicht
- 4: Bild-/Textbearbeitungswerkzeuge
- 5: Layouter
- 6: grafisches User-Interface (GUI)
- 7: Datenbank
- 8: Anwender
- 9: Vorstufendaten
- 10: erster Rechner mit Layoutprogramm
- 11: Adobe-InDesign-Server
- 12: Layoutprogramm
- 13: zweiter Rechner mit Browser

## Patentansprüche

1. Verfahren zur Erstellung von Vorstufendaten (9) für Druckaufträge durch einen ersten, mit einem Netzwerk verbundenen, Rechner (10), wobei der erste Rechner (10) aus einem Server (11) mit einer Datenbank (7) und darin gespeicherten Templates (2) für Bildinhalte, sowie einem Layoutprogramm (12) mit einer Benutzeroberfläche (6) besteht, die folgenden Schritte umfassend:
• Erstellen der Templates (2) mit Bildinhalten auf einem lokalen Rechner
• Hochladen und Abspeichern der Templates (2) in der Datenbank (7) des Servers (11) durch das Anwendungsprogramm
• Zugriff auf die Benutzeroberfläche (6) des Layoutprogramms (12) von einem zweiten Rechner (13) mit einem Internetbrowser (1)
• Erstellen von Vorstufendaten (9) eines Druckauftrages mit fertigem Layout durch Editieren der vorhandenen Templates (2) mittels der Bild- und Textbearbeitungswerkzeuge (4) der Benutzeroberfläche (6) durch den zweiten Rechner (13)
• Abspeichern der fertigen Vorstufendaten (9) auf dem Server (11)
• Durchführen eines Druckauftrages mit den gespeicherten Vorstufendaten (9)

2. Verfahren nach Anspruch 1,
**dadurch gekennzeichnet,**
**dass** der zweite Rechner (13) sich im selben Netzwerk wie der erste Rechner (10) befindet oder einen Zugriff auf dieses Netzwerk hat.

3. Verfahren nach einem der vorherigen Ansprüche,
**dadurch gekennzeichnet,**
**dass** bereits auf dem Server (11) abgespeicherte Vorstufendaten (9) ausgecheckt, nachbearbeitet und wieder eingecheckt werden.

4. Verfahren nach einem der vorherigen Ansprüche,
**dadurch gekennzeichnet,**
**dass** es sich sowohl bei den zu erstellenden Vorstufendaten (9) als auch bei den Templates (2) um Dokumente im Adobe-InDesign Format handelt.

5. Verfahren nach einem der vorherigen Ansprüche,
**dadurch gekennzeichnet,**
**dass** es sich bei dem Server (11) auf dem ersten Rechner (10) um eine Software "Adobe-InDesign-Server", inklusive einer Datenbank (7), handelt, welche auf dem ersten Rechner eingerichtet ist und bei dem Layoutprogramm (12) um ein Anwendungsprogramm, welches die Software "Adobe-InDesign-Server" kontrolliert.

6. Verfahren nach einem der vorherigen Ansprüche,
**dadurch gekennzeichnet,**
**dass** die Templates (2) aus drei Arten von Templates, einer Musterseite mit dem Grunddesign, einem Raster mit den geometrischen Platzierungsinformationen für Texte und Bilder und aus SingleAssets, den zu platzierenden Texten und Bildern, bestehen.

7. Verfahren nach einem der vorherigen Ansprüche,
**dadurch gekennzeichnet,**
**dass** über die Benutzeroberfläche (6) die Templates (2) in verschiedenster Weise editierbar sind, insbesondere durch das Einfügen neuer Texte und Bilder, das Verändern von Texten, das Vergrößern, Verkleinern, Rotieren und Verschieben von Bildern und das editieren und austauschen bereits platzierter Texte und Bilder.

8. Verfahren nach Anspruch 7,
**dadurch gekennzeichnet,**
**dass** das Editieren der Templates (2) nach dem WYSIWYG-Prinzip funktioniert.

9. Verfahren nach Anspruch 7 oder Anspruch 8,
**dadurch gekennzeichnet,**
**dass** das Editieren neue Templates (2) erstellt werden, welche auf dem Server (11) abgespeichert werden und dann für das Erstellen weiterer Vorstufendaten (9) zur Verfügung stehen.
